# EUROPEAN PATENT APPLICATION

(11) **EP 4 141 631 A1**
(43) Date of publication of application: **01.03.2023**
(21) Application number: 21800364.8
(22) Date of filing: 18.03.2021
(51) Int. Cl.: G06F 3/0481

(54) **DEVICE CONTROL METHOD AND APPARATUS, STORAGE MEDIUM, AND ELECTRONIC DEVICE**

(30) Priority: 07.05.2020 CN 202010379157
(71) Applicant: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Taor, Simon Edward William
(86) International application number: PCT/CN2021/081573
(87) International publication number: WO 2021/223520

(57) **Abstract**

A device control method applicable to an electronic device (100) is provided in the disclosure. The electronic device (100) includes a retractable touch display screen (30) and is configured with a control icon. The method includes the following. The retractable touch display screen (30) is controlled to deploy/retract (101) according to a first preset operation in response to the touch display screen (30) being in a screen-on state and the control icon receiving the first preset operation. In the disclosure, an operability of the electronic device (100) can be improved.

## Description

### CROSS-REFERENCE TO RELATED APPLICATION(S)

This application claims priority to and the benefit of Chinese Patent Application Serial No. 202010379157.5, filed May 7, 2020 to CNIPA (China national intellectual property administration), and entitled "DEVICE CONTROL METHOD, DEVICE CONTROL APPARATUS, STORAGE MEDIUM, AND ELECTRONIC DEVICE", the entire disclosure of which is hereby incorporated by reference.

### TECHNICAL FIELD

This application relates to the technical field of electronic devices, and in particular, to a device control method, a device control apparatus, a storage medium, and an electronic device.

### BACKGROUND

With technology continues to evolve, a form of electronic devices is changing, from a small screen to a large screen, from a display screen for simply displaying images and text to a touch display screen that can receive user touch operations, and so on.

### SUMMARY

A device control method, a device control apparatus, a storage medium, and an electronic device are provided in implementations of the disclosure, which can improve the operability of the electronic device.

In a first aspect, a device control method applicable to an electronic device is provided in the implementations of the disclosure. The electronic device includes a retractable touch display screen and is configured with a control icon. The method includes the following. The retractable touch display screen is controlled to deploy/retract according to a first preset operation in response to the touch display screen being in a screen-on state and the control icon receiving the first preset operation.

In a second aspect, a device control method applicable to an electronic device is provided in the implementations of the disclosure. The electronic device includes a retractable touch display screen. The method includes the following. The retractable touch display screen is controlled to deploy/retract according to a second preset operation in response to the touch display screen being in a screen-off state and the touch display screen receiving the second preset operation.

In a third aspect, a device control apparatus applicable to an electronic device is provided in the implementations of the disclosure. The electronic device includes a retractable touch display screen and is configured with a control icon. The device control apparatus includes a first processing module. The first processing module is configured to control the retractable touch display screen to deploy/retract according to a first preset operation in response to the touch display screen being in a screen-on state and the control icon receiving a first preset operation.

In a fourth aspect, a device control apparatus applicable to an electronic device is provided in the implementations of the disclosure. The electronic device includes a retractable touch display screen. The device control apparatus includes a second processing module. The second processing module is configured to control the retractable touch display screen to deploy/retract according to a second preset operation in response to the touch display screen being in a screen-off state and the touch display screen receiving the second preset operation.

In a fifth aspect, a computer-readable storage medium is provided in the implementations of the disclosure. The computer-readable storage medium is configured to store computer programs which, when executed on a computer, are operable to cause the computer to perform operations of the device control method provided in the first aspect or the second aspect in the implementations of the disclosure.

In a sixth aspect, an electronic device is further provided in the implementations of the disclosure. The electronic device includes a memory, a processor, and a retractable touch display screen and is configured with a control icon. The processor is configured to invoke computer programs stored in the memory to control the retractable touch display screen to deploy/retract according to a first preset operation in response to the touch display screen being in a screen-on state and the control icon receiving the first preset operation.

### BRIEF DESCRIPTION OF THE DRAWINGS

The technical solution and advantages of implementations described herein will become apparent from elaboration of implementations in conjunction with the accompanying drawings.
FIGS. 1 to 5 are schematic structural views of an electronic device with a retractable touch display screen provided in implementations of the disclosure.
FIG. 6 is a first schematic flow chart of a device control method provided in implementations of the disclosure.
FIG. 7 is a second schematic flow chart of a device control method provided in implementations of the disclosure.
FIG. 8 is a third schematic flow chart of a device control method provided in implementations of the disclosure.
FIG. 9 is a fourth schematic flow chart of a device control method provided in implementations of the disclosure.
FIGS. 10 to 14 are scene schematic diagrams of a device control method provided in implementations of the disclosure.
FIG. 15 is a first schematic structural diagram of a device control apparatus provided in implementations of the disclosure.
FIG. 16 is a second schematic structural diagram of a device control apparatus provided in implementations of the disclosure.
FIG. 17 is a schematic structural diagram of an electronic device provided in implementations of the disclosure.
FIG. 18 is another schematic structural diagram of an electronic device provided in implementations of the disclosure.

### DETAILED DESCRIPTION

Referring to the drawings, same component symbols represent same components. The principle of the disclosure is illustrated via an implementation in an appropriate computing environment. The following description is based on exemplified implementations of the disclosure, which should not be considered as a limitation on other implementations not detailed herein.

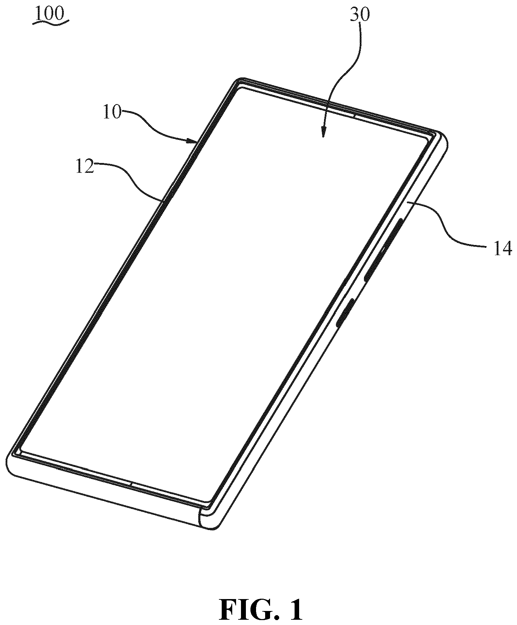

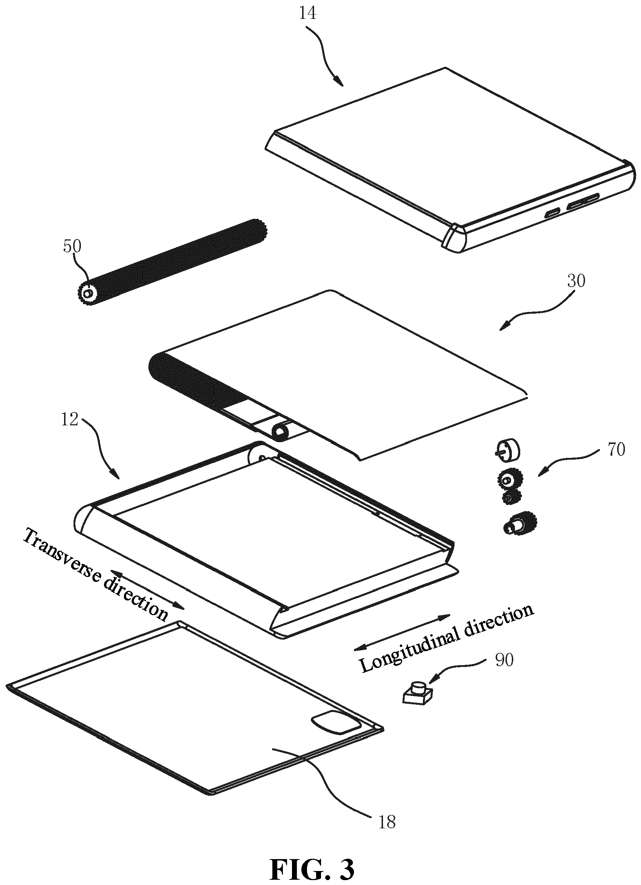

Refer to FIGS. 1 to 3, which are schematic structural views of an electronic device with a retractable touch display screen provided in an implementation of the disclosure.

The electronic device 100 in this implementation includes a housing assembly 10, a flexible display screen 30, a driving member 50, and a driving mechanism 70. The housing assembly 10 is hollow. Components such as the driving member 50, the driving mechanism 70, and a camera 90 can be arranged in the housing assembly 10. It can be understood that the electronic device 100 in the implementation of the disclosure includes but is not limited to mobile terminals such as mobile phones and tablet computers, or other portable electronic devices. For example, the electronic device 100 is described as a mobile phone herein.

In this implementation, the housing assembly 10 includes a first housing 12 and a second housing 14, and the first housing 12 and the second housing 14 can move relative to each other. In this implementation, the first housing 12 and the second housing 14 are slidably connected, that is, the second housing 14 can slide relative to the first housing 12.

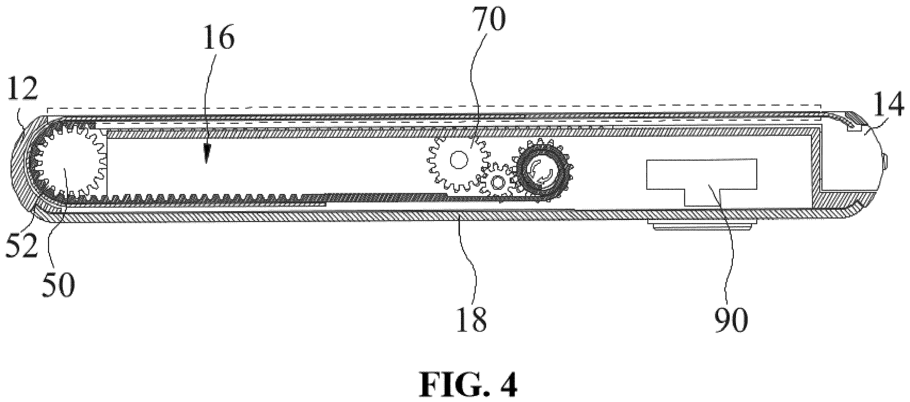

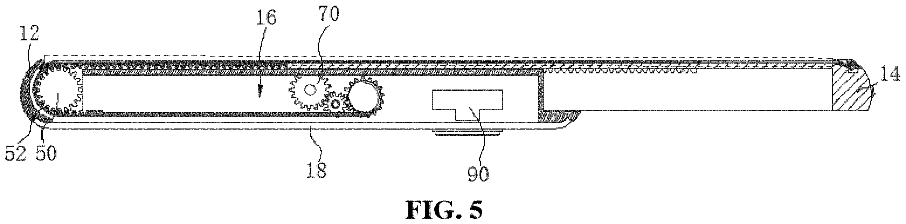

Refer to FIG. 4 and FIG. 5, the first housing 12 and the second housing 14 cooperatively define an accommodating space 16. The accommodating space 16 can be used to receive components such as the driving member 50, the camera 60, and the driving mechanism 70. The housing assembly 10 may further include a rear cover 18. The rear cover 18, the first housing 12, and the second housing 14 cooperatively define the accommodating space 16.

The driving member 50 is disposed in the second housing 14. The flexible display screen 30 has one end disposed in the first housing 12 and the other end disposed in the accommodating space 16, and the flexible display screen 30 is wound on and extends beyond the driving member 50, so that the flexible display screen is partially hidden in the accommodating space 16 and can be not light-up. As illustrated in FIG. 5, when the first housing 12 and the second housing 14 move away from each other, the flexible display screen 30 can be driven to unwind and expand by the driving member 50, so that a relatively large part of the flexible display screen 30 is exposed outside the accommodating space 16. The part of the flexible display screen 30 exposed outside the accommodating space 16 is light-up, so that an enlarged display region can be presented by the electronic device 100. For example, FIG. 1 to FIG. 2 illustrate a comparison in form changes of the flexible display screen 30 of the electronic device from a retracted state (an unexpanded state) to a deployed state (an expanded state) in a transverse direction.

The driving member 50 can be a rotating shaft structure with teeth 52 on an outer side thereof. The flexible display screen 30 is linked with the driving member 50 by means of meshing or the like. When the first housing 12 and the second housing 14 move away from each other, the driving member 50 drives part of the flexible display screen 30 meshed with the driving member 50 to move and unwind.

It can be understood that the driving member 50 can also be a circular shaft without the teeth 52. When the first housing 12 and the second housing 14 move away from each other, the part of the flexible display screen 30 wound on the driving member 50 is expanded by the driving member 50, so that a relatively large part of flexible display screen 30 is exposed outside the accommodating space 16 and is in a flattened state. Specifically, the driving member 50 is rotatably disposed on the second housing 14, and when the flexible display screen 30 is gradually expanded, the driving member 50 can rotate with a movement of the flexible display screen 30.

In other implementations, the driving member 50 can also be fixed on the second housing 14. The driving member 50 has a smooth surface. When the flexible display screen 30 is expanded, the driving member 50 is in slidable contact with the flexible display screen 30 via a smooth surface of the driving member 50.

When the first housing 12 and the second housing 14 move toward each other, the flexible display screen can be driven to retract via the driving member 50. Alternatively, the electronic device 100 further includes a reset member (not illustrated). One end of the flexible display screen received in the accommodating space 16 is coupled with the reset member. When the first housing 12 and the second housing 14 move toward each other, the reset member drives the flexible display screen 30 to reset, so that the flexible display screen is partially retracted into the accommodating space 16.

In this implementation, the driving mechanism 70 can be disposed in the accommodating space 16, and the driving mechanism 70 can be coupled with the second housing 14. The driving mechanism 70 is configured to drive the second housing 14 to move away from the first housing 12, thereby driving the flexible display assembly 30 to deploy(expand). It can be understood that the driving mechanism 70 can also be omitted, and a user can directly manually drive the first housing and the second housing to move away from each other.

It is noted that, in addition to a hardware layout design according to FIGS. 1 to 5 that allows the flexible display screen to extend/retract in a horizontal direction of the electronic device (for example, to extend/retract in a left-right direction), in some other implementations, the hardware layout design can be changed in directions to allow the flexible display screen to extend/retract in a longitudinal direction of the electronic device (for example, to extend/retract in an up-down direction).

A device control method applicable to an electronic device is provided in the implementations of the disclosure. The electronic device includes a retractable touch display screen and is configured with a control icon. The method includes the following. The retractable touch display screen is controlled to deploy/retract according to a first preset operation when the touch display screen is in a screen-on state and the control icon receives the first preset operation.

In an implementation, the control icon is movable. The retractable touch display screen is controlled to deploy/retract according to the first preset operation when the touch display screen is in the screen-on state and the control icon receives the first preset operation as follows. A movement parameter of the control icon is determined when the touch display screen is in the screen-on state and the control icon is moved. The retractable touch display screen is controlled to deploy/retract according to the movement parameter if the movement parameter of the control icon meets a preset condition.

In an implementation, the retractable touch display screen is controlled to deploy/retract according to the movement parameter if the movement parameter of the control icon meets a preset condition includes the following. The retractable touch display screen is controlled to deploy if a movement direction of the control icon is a first preset direction. The retractable touch display screen is controlled to retract if the movement direction of the control icon is a second preset direction.

In an implementation, the movement parameter further includes a movement distance. The retractable touch display screen is controlled to deploy if the movement direction of the control icon is the first preset direction as follows. The retractable touch display screen is controlled to deploy when the movement direction of the control icon is the first preset direction and the movement distance of the control icon is greater than or equal to a preset distance threshold. The retractable touch display screen is controlled to retract if the movement direction of the control icon is the second preset direction as follows. The retractable touch display screen is controlled to retract when the movement direction of the control icon is the second preset direction and the movement distance of the control icon is greater than or equal to the preset distance threshold.

In an implementation, the movement parameter further includes a pressure value of a press detected at a target position on the touch display screen, and the target position is any position on a movement trajectory. The retractable touch display screen is controlled to deploy if the movement direction of the control icon is the first preset direction as follows. The retractable touch display screen is controlled to deploy when the movement direction of the control icon is the first preset direction and the pressure value is greater than or equal to a preset pressure threshold. The retractable touch display screen is controlled to retract if the movement direction of the control icon is the second preset direction as follows. The retractable touch display screen is controlled to retract when the movement direction of the control icon is the second preset direction and the pressure value is greater than or equal to the preset pressure threshold.

Another device control method applicable to an electronic device is further provided in implementations of the disclosure. The electronic device includes a retractable touch display screen. The method includes the following. The retractable touch display screen is controlled to deploy/retract according to a second preset operation when the touch display screen is in a screen-off state and the touch display screen receives the second preset operation.

In an implementation, the retractable touch display screen is controlled to deploy/retract according to the second preset operation when the touch display screen is in the screen-off state and the touch display screen receives the second preset operation as follows. A touch trajectory of a touch operation is determined when the touch display screen is in the screen-off state and the touch display screen receives the touch operation. If the touch trajectory of the touch operation is a first preset trajectory, the retractable touch display screen is controlled to deploy according to the first trajectory. If the touch trajectory of the touch operation is a second preset trajectory, the retractable touch display screen is controlled to retract according to the second trajectory.

In an implementation, the retractable touch display screen is controlled to deploy/retract according to the second preset operation when the touch display screen is in the screen-off state and the touch display screen receives the second preset operation as follows. The touch display screen is controlled to enter a light-sleep mode (also known as a doze mode) when the touch display screen is in the screen-off state, where in the light-sleep mode, the electronic device powers the touch display screen, and when the touch display screen receives a touch operation, an interrupt detection event is triggered to detect whether the touch operation is the second preset operation. The retractable touch display screen is controlled to deploy/retract according to the second preset operation when the touch operation is the second preset operation.

It can be understood that the implementations of the disclosure may be carried out by an electronic device such as a smart phone or a tablet computer.

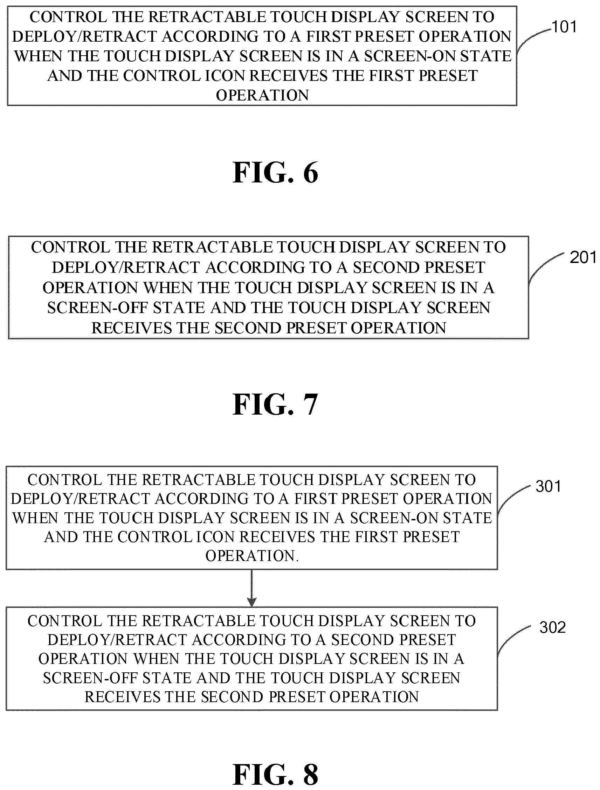

Refer to FIG. 6, which is a first schematic flow chart of a device control method provided in implementations of the disclosure. The device control method is applicable to an electronic device. The electronic device may include a retractable touch display screen and be configured with a control icon. The device control method may begin at 101. At 101, control the retractable touch display screen to deploy/retract according to a first preset operation when the touch display screen is in a screen-on state and the control icon receives the first preset operation.

With technology continues to evolve, a form of the electronic device is changing, from a small screen to a large screen, from a display screen for simply displaying images and text to a touch display screen that can receive touch operations of the user, and so on. However, in the related art, it is still not flexible enough for a user to operate the electronic device. That is, an operability of the electronic device is not good.

It should be noted that, in implementations of the disclosure, the electronic device may include a retractable touch display screen. The retractable touch display screen may be a touch display screen that can be deployed, expanded, or retracted. The retractable touch display screen can be a flexible display screen which can be bent, rolled, folded, and the like. In the electronic device provided with the retractable touch display screen, a screen visible size can be increased by expanding the retractable touch display screen and be reduced by retracting the retractable touch display screen.

In the implementations of the disclosure, for example, the electronic device can control the retractable touch display screen to deploy/retract according to the first preset operation when the retractable touch display screen of the electronic device is in the screen-on state and the control icon receives the first preset operation.

For example, the electronic device can first detect whether its retractable touch display screen is in the screen-on state. When the retractable touch display screen is in the screen-on state, the electronic device can detect whether the control icon receives the first preset operation.

If the control icon does not receive the first preset operation, then the electronic device can continue to monitor whether the control icon receives the first preset operation.

If it is detected that the control icon receives the first preset operation, then the electronic device can control the retractable touch display screen, according to the first preset operation, to expand accordingly to increase the screen visible size or to retract to reduce the screen visible size.

In the implementations of the disclosure, the electronic device can control the touch display screen to deploy/retract according to an operation received by the control icon when the touch display screen is in the screen-on state, which can improve the operability of the electronic device.

Refer to FIG. 7, which is a second schematic flow chart of a device control method provided in implementations of the disclosure. The device control method is applicable to an electronic device. The electronic device includes a retractable touch display screen. The device control method may begin at 201. At 201, control the retractable touch display screen to deploy/retract according to a second preset operation when the touch display screen is in a screen-off state and the touch display screen receives the second preset operation.

In the implementations of the disclosure, the electronic device may include the retractable touch display screen. The retractable touch display screen may be a touch display screen that can be deployed or retracted. The retractable touch display screen can be a flexible display screen which can be bent, rolled, folded, and the like. In the electronic device provided with the retractable touch display screen, a screen visible size can be increased by deploying the retractable touch display screen and be reduced by retracting the retractable touch display screen.

In the implementations of the disclosure, for example, the electronic device can control the retractable touch display screen to deploy/retract according to the second preset operation when the retractable touch display screen of the electronic device is in the screen-off state and the touch display screen receives the second preset operation.

For example, the electronic device can first detect whether its retractable touch display screen is in the screen-off state. When the retractable touch display screen is in the screen-off state, the electronic device can detect whether the touch display screen receives the second preset operation.

If the touch display screen does not receive the second preset operation, then the electronic device can continue to monitor whether the touch display screen receives the second preset operation.

If it is detected that the touch display screen receives the second preset operation, then the electronic device can control the retractable touch display screen, according to the second preset operation, to deploy accordingly to increase the screen visible size or to retract to reduce the screen visible size.

In the implementations of the disclosure, the electronic device can control the retractable touch display screen to deploy/retract according to a touch operation received by the touch display screen when the touch display screen is in the screen-off state, which can improve the operability of the electronic device.

Refer to FIG. 8, which is a third schematic flow chart of a device control method provided in implementations of the disclosure. The device control method is applicable to an electronic device. The electronic device includes a retractable touch display screen. The device control method may begin at 301. At 301, control the retractable touch display screen to deploy/retract according to a first preset operation when the touch display screen is in a screen-on state and the control icon receives the first preset operation.

With technology continues to evolve, a form of electronic devices is changing, from a small screen to a large screen, from a display screen for simply displaying images and text to a touch display screen that can receive user touch operations, and so on. However, in the related art, it is still not flexible enough for a user to operate the electronic device. That is, an operability of the electronic device is not good.

It should be noted that, in the implementations of the disclosure, the electronic device may include a retractable touch display screen. The retractable touch display screen may be a touch display screen that can be deployed or retracted. The retractable touch display screen can be a flexible display screen which can be bent, rolled, folded, and the like. In the electronic device provided with the retractable touch display screen, a screen visible size can be increased by stretching the retractable touch display screen and be reduced by retracting the retractable touch display screen.

In the implementations of the disclosure, for example, the electronic device can control the retractable touch display screen to deploy/retract according to the first preset operation when the retractable touch display screen of the electronic device is in the screen-on state and the control icon receives the first preset operation.

For example, when the retractable touch display screen is in the screen-on state, the electronic device can detect whether the control icon receives the first preset operation.

If the control icon does not receive the first preset operation, then the electronic device can continue to monitor whether the control icon receives the first preset operation.

If it is detected that the control icon receives the first preset operation, then the electronic device can control the retractable touch display screen to deploy or retract accordingly according to the first preset operation.

At 302, control the retractable touch display screen to deploy/retract according to a second preset operation when the touch display screen is in a screen-off state and the touch display screen receives the second preset operation.

For example, the electronic device can control the retractable touch display screen to deploy/retract according to the second preset operation when the retractable touch display screen of the electronic device is in the screen-off state and the touch display screen receives the second preset operation.

For example, when the retractable touch display screen is in the screen-off state, the electronic device can detect whether the touch display screen receives the second preset operation.

If the touch display screen does not receive the second preset operation, then the electronic device can continue to monitor whether the touch display screen receives the second preset operation.

If it is detected that the touch display screen receives the second preset operation, then the electronic device can control the retractable touch display screen to deploy/retract accordingly according to the second preset operation.

It can be understood that, in the implementations of the disclosure, the electronic device can control the retractable touch display screen to deploy/retract according to the first preset operation when the retractable touch display screen is in the screen-on state and the control icon receives the first preset operation. The electronic device can control the retractable touch display screen to deploy/retract according to the second preset operation when the touch display screen is in the screen-off state and the touch display screen receives the second preset operation. That is, in the implementations of the disclosure, the electronic device can control the retractable touch display screen to deploy or retract in different ways when the touch display screen is in different states (i.e., the screen-on state or the screen-off state), which can improve the operability of the electronic device.

In addition, in the implementations of the disclosure, the retractable touch display screen can be controlled to deploy or retract in different ways when the touch display screen is in different states (i.e., the screen-on state or the screen-off state), and thus in the implementations of the disclosure, variety and flexibility of operations of the electronic device by the user can also be improved.

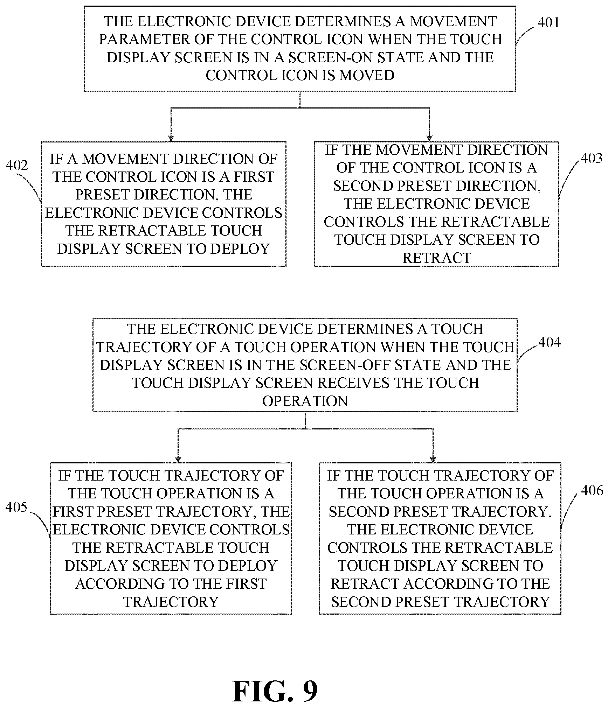

Refer to FIG. 9, which is a fourth schematic flow chart of a device control method provided in implementations of the disclosure. The device control method is applicable to an electronic device. The electronic device can include a retractable touch display screen and be configured with a control icon. The control icon is movable.

The device control method provided in implementations of the disclosure may begin at 401. At 401, the electronic device determines a movement parameter of the control icon when the touch display screen is in a screen-on state and the control icon is moved.

For example, when the retractable touch display screen is in the screen-on state and the control icon is moved by a user, the electronic device can determine the movement parameter of the control icon, and control the retractable touch display screen to deploy/retract if the movement parameter meets a preset condition. The movement parameter of the control icon may include at least a movement direction of the control icon.

After determining the movement direction of the control icon, the electronic device can detect whether the movement direction of the control icon is a first preset direction or a second preset direction.

If the movement direction of the control icon is not the first preset direction or the second preset direction, then the electronic device can perform other operations.

If the movement direction of the control icon is the first preset direction, then the electronic device can proceed to carry out operations at 402. Or, if the movement direction of the control icon is the second preset direction, then the electronic device can proceed to carry out operations at 403.

At 402, if a movement direction of the control icon is a first preset direction, the electronic device controls the retractable touch display screen to deploy.

For example, the first preset direction is a downward direction. Then, when it is detected that the movement direction of the control icon is the downward direction, the electronic device can control the retractable touch display screen to expand, thereby increasing the visible size of the touch display screen.

The first preset direction can also be other directions, such as a leftward direction, and so on, which are not limited herein.

At 403, if the movement direction of the control icon is a second preset direction, the electronic device controls the retractable touch display screen to retract.

For example, the second preset direction is an upward direction. Then, when it is detected that the movement direction of the control icon is the upward direction, the electronic device can control the retractable touch display screen to retract, thereby decreasing the visible size of the touch display screen.

The second preset direction can also be other directions, such as a rightward direction, and so on, which are not limited herein.

At 404, the electronic device determines a touch trajectory of a touch operation when the touch display screen is in the screen-off state and the touch display screen receives the touch operation.

For example, the electronic device in this implementation may have a screen-off gesture function (also known as a blank screen gesture function). The screen-off gesture function refers to that when the touch display screen of the electronic device is in the screen-off state, the user can draw along a specific trajectory on the touch display screen, and the electronic device can recognize the trajectory and a user gesture corresponding to the trajectory and execute a shortcut operation corresponding to the user gesture.

When the retractable touch display screen is in the screen-off state and the touch display screen receives the touch operation of the user, the electronic device can determine the touch trajectory of the touch operation.

After determining the touch trajectory of the touch operation of the user, the electronic device can detect whether the touch trajectory is a first preset trajectory or a second preset trajectory.

If the touch trajectory is not the first preset trajectory or the second preset trajectory, then the electronic device can perform other operations.

If the touch trajectory is the first preset trajectory, then the electronic device can proceed to carry out operations at 405. Or, if the touch trajectory is the second preset trajectory, then the electronic device can proceed to carry out operations at 406.

At 405, if the touch trajectory of the touch operation is a first preset trajectory, the electronic device controls the retractable touch display screen to deploy according to the first trajectory.

For example, the first preset trajectory is Z-shaped. Then, when the touch trajectory of the touch operation of the user on the touch display screen is Z-shaped, the electronic device can control the retractable touch display screen to expand.

For example, if the user draws a Z-shaped trajectory on the retractable touch display screen when the retractable touch display screen is in the screen-off state, the electronic device can control the retractable touch display screen to expand, thus increasing the visible size of the touch display screen.

The first preset trajectory can also be other trajectories, such as an O-shape trajectory, and so on, which are not limited herein.

At 406, if the touch trajectory of the touch operation is a second preset trajectory, the electronic device controls the retractable touch display screen to retract according to the second preset trajectory.

For example, the second preset trajectory is S-shaped. Then, when the touch trajectory of the touch operation of the user on the touch display screen is S-shaped, the electronic device can control the retractable touch display screen to retract.

For example, if the user draws an S-shaped trajectory on the retractable touch display screen when the retractable touch display screen is in the screen-off state, the electronic device can control the retractable touch display screen to retract, thus decreasing the visible size of the touch display screen.

The first preset trajectory can also be other trajectories, such as a V-shape trajectory, and so on, which are not limited herein.

It can be understood that, in the implementations of the disclosure, when the retractable touch display screen is in the screen-on state, the electronic device can control deployment and retraction of the touch display screen by controlling a movement of the control icon. When the retractable touch display screen is in the screen-off state, the electronic device can control the deployment and retraction of the touch display screen according to the touch trajectory of the touch operation received by the touch display screen. That is, the electronic device can control the deployment and retraction of the retractable touch display screen in different ways in different screen states. Therefore, in the implementations of the disclosure, the operability, operation variety, and flexibility of the electronic device to the retractable touch display screen can be improved.

In another implementation, when the control icon is moved, the movement parameter of the control icon may include the movement distance in addition to the movement direction.

In this implementation, the electronic device controls the retractable touch display screen to deploy if the movement direction of the control icon is the first preset direction at 402 as follows. The electronic device controls the retractable touch display screen to deploy if the movement direction of the control icon is the first preset direction and the movement distance of the control icon is greater than or equal to a preset distance threshold.

The electronic device controls the retractable touch display screen to retract if the movement direction of the control icon is the second preset direction at 403 as follows. The electronic device controls the retractable touch display screen to retract when the movement direction of the control icon is the second preset direction and the movement distance of the control icon is greater than or equal to the preset distance threshold.

That is, only when the movement direction of the control icon is the first preset direction or the second preset direction and the movement distance of the control icon reaches the preset distance threshold, the electronic device will control the retractable touch display screen to deploy or retract accordingly. If the movement distance of the control icon does not reach the preset distance threshold, the electronic device may not control the retractable touch display screen to deploy or retract accordingly.

It can be understood that, by further limiting that the electronic device will control the retractable touch display screen to deploy/retract according to the movement direction of the control icon only when the movement distance of the control icon reaches the preset distance threshold, an incorrect deploy/retraction of the retractable touch display screen due to a movement of the control icon caused by user misoperation can be effectively avoided, and thus the user experience can be enhanced.

In yet another implementation, when the control icon is moved, the movement parameter of the control icon may include, in addition to the movement direction, a pressure value of a pressure detected at a target position on the touch display screen, and the target position can be any position on the movement trajectory of the control icon.

In this implementation, the electronic device controls the retractable touch display screen to deploy if the movement direction of the control icon is the first preset direction at 402 as follows. The electronic device controls the retractable touch display screen to deploy when the movement direction of the control icon is the first preset direction and the pressure value is greater than or equal to the preset pressure threshold.

The electronic device controls the retractable touch display screen to retract if the movement direction of the control icon is the second preset direction at 403 as follows. The electronic device controls the retractable touch display screen to retract when the movement direction of the control icon is the second preset direction and the pressure value is greater than or equal to the preset pressure threshold.

That is, only when the movement direction of the control icon is the first preset direction or the second preset direction as well as the user applies a heavy press (i.e., a press with a pressure value greater than or equal to the preset pressure threshold) on the touch display screen during the movement of the control icon, the electronic device will control the retractable touch display screen to deploy or retract accordingly. If the touch display screen of the electronic device does not receive a heavy press during the movement of the control icon, the electronic device may not control the retractable touch display screen to deploy or retract accordingly.

It can be understood that, by further limiting that the electronic device will control the retractable touch display screen to deploy/retract according to the movement direction of the control icon only when the touch display screen receives the heavy press during the movement of the control icon, an incorrect deploy/retraction of the retractable touch display screen due to a movement of the control icon caused by user misoperation can be effectively avoided, and thus the user experience can be enhanced.

In other implementations, the electronic device may control the retractable touch display screen to deploy/retract according to the second preset operation when the touch display screen is in the screen-off state and the touch display screen receives the second preset operation as follows. The electronic device controls the touch display screen to enter a light-sleep mode when the touch display screen is in the screen-off state, where in the light-sleep mode, the electronic device powers the touch display screen, and when the touch display screen receives a touch operation, an interrupt detection event is triggered to detect whether the touch operation is the second preset operation. The electronic device controls the retractable touch display screen to deploy/retract according to the second preset operation when the touch operation is the second preset operation.

For example, when the retractable touch display screen is in the screen-off state, the electronic device can control the touch display screen to enter the light-sleep mode (also known as the doze mode). In the light-sleep mode, when the touch display screen receives the touch operation, the electronic device can continue to power the touch display screen, and trigger the interrupt detection event, so as to detect whether the touch operation is the second preset operation.

If the touch operation is the second preset operation, then the electronic device can control the retractable touch display screen to deploy or retract according to the second preset operation.

If the touch operation is not the second preset operation, then the electronic device can perform other operations, such as continuing to detect whether the touch operation is received when the touch display screen is in the light-sleep mode.

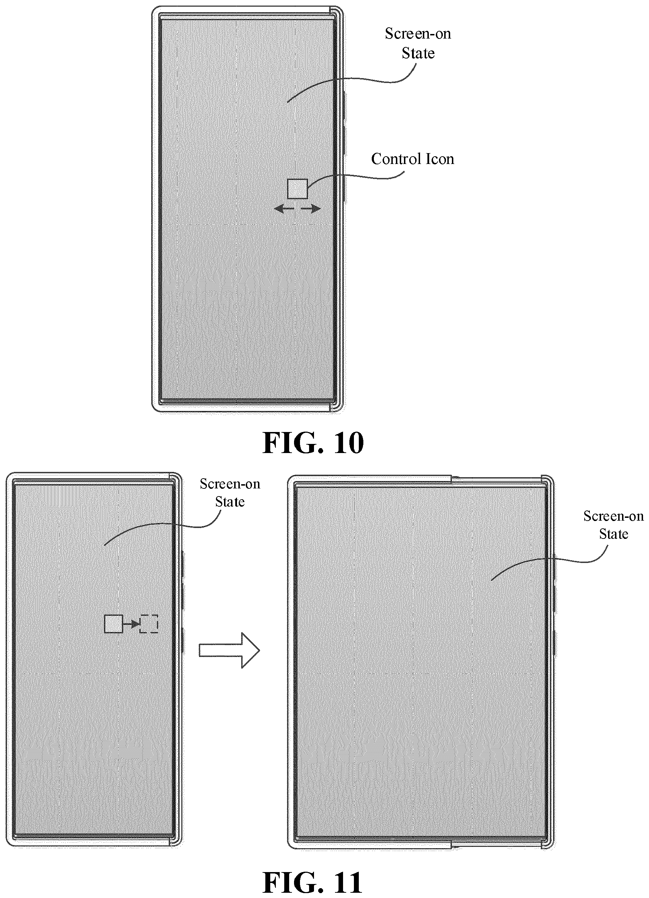

Refer to FIGS. 10-14, which are scene schematic diagrams of a device control method provided in implementations of the disclosure.

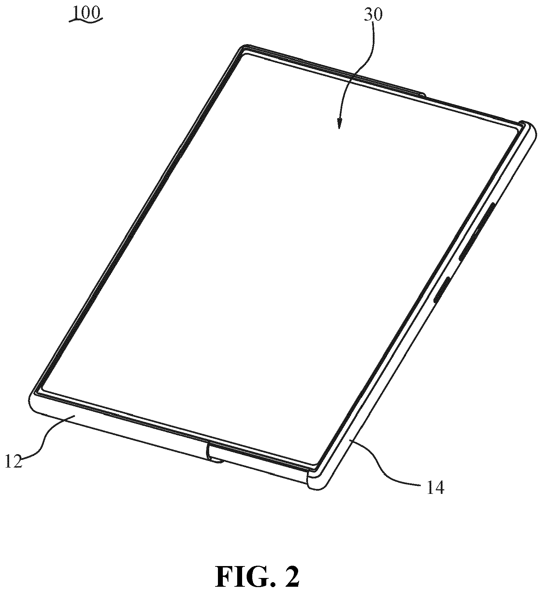

For example, the electronic device provided in this implementation may include the retractable touch display screen. The retractable touch display screen may be a touch display screen that can be expanded or retracted. The retractable touch display screen can be a flexible display screen which can be bent, rolled, folded, and the like. In the electronic device provided with the retractable touch display screen, a screen visible size can be increased by expanding the retractable touch display screen and be reduced by retracting the retractable touch display screen. For example, as illustrated in FIGS. 1 and 2, FIG. 1 illustrates a screen form of the electronic device when the retractable touch display screen is in the retracted state, and FIG. 2 illustrates a screen form of the electronic device when the retractable touch display screen is in the expanded state (deployed state).

In addition, the electronic device is provided with the control icon. The control icon can be used to control the retractable touch display screen to deploy or retract. The control icon may be a virtual sliding key implemented by software. The control icon is movable.

In an implementation, as illustrated in in FIG. 10, when the retractable touch display screen of the electronic device is in the screen-on state, the control icon can be displayed on the touch display screen. The electronic device can detect whether the control icon is moved by the user. For example, the electronic device can display a virtual slide rail implemented by software on the touch display screen, the control icon is disposed on the virtual slide rail, and the control icon is movable on the virtual slide rail.

When detecting that the control icon is moved by the user, the electronic device can obtain the movement direction of the control icon, and detect whether the movement direction of the control icon is a preset leftward direction or a preset rightward direction.

For example, as illustrated in FIG. 11, when the retractable touch display screen is in the screen-on state and the touch display screen is in the retracted state, the user moves the control icon rightward, that is, the electronic device detects that the movement direction of the control icon is the rightward direction. In this case, the electronic device can control the retractable touch display screen to expand. It can be seen from FIG. 11, when the touch display screen is expanded, an area of the touch display screen available for touch and display on the electronic device is enlarged.

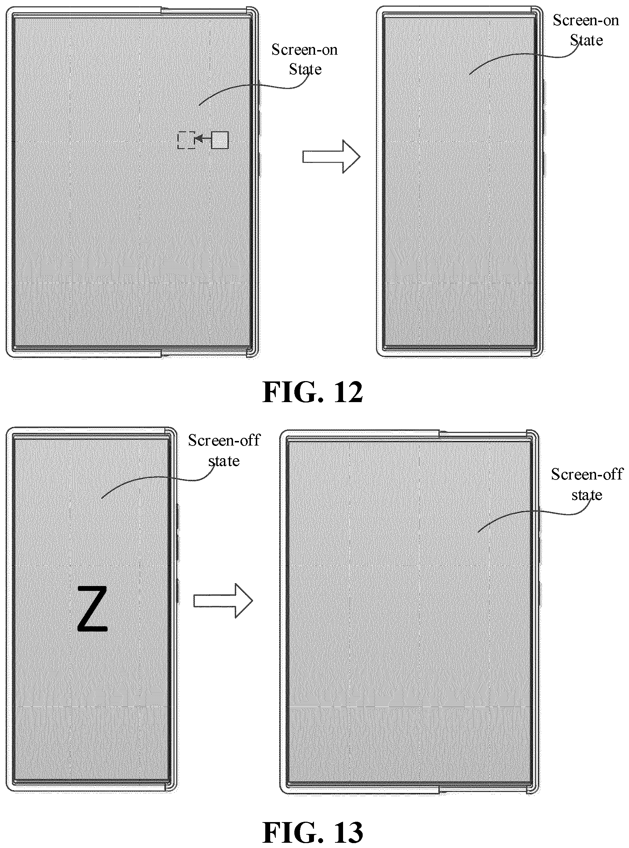

After elapse of a duration, the user needs to retract the expanded touch display screen back. Then, also in the screen-on state, the user can move the control icon leftward, that is, the electronic device detects that the movement direction of the control icon is the leftward direction. In this case, as illustrated in FIG. 12, the electronic device can control the retractable touch display screen to retract. It can be seen from FIG. 12, when the touch display screen is retracted, the area of the touch display screen available for touch and display on the electronic device is reduced.

When the touch display screen of the electronic device is in the screen-off state, the retractable touch display screen can enter the light-sleep mode. In an implementation, in the light-sleep mode, the electronic device can continue to power the touch display screen, and an interrupt detection event can be triggered to detect whether the touch trajectory of the touch operation is a preset Z-shaped trajectory or a preset S-shaped trajectory when the touch display screen receives the touch operation.

For example, as illustrated in FIG. 13, when the retractable touch display screen is in the screen-off state and the touch display screen is in the retracted state, the user draws a Z-shaped pattern on the touch display screen, that is, the electronic device detects that the touch trajectory of the touch operation received on the touch display screen is the preset Z-shaped trajectory. In this case, the electronic device can control the retractable touch display screen to expand. It can be seen from FIG. 13, when the touch display screen is expanded, the area of the touch display screen available for touch and display on the electronic device is enlarged.

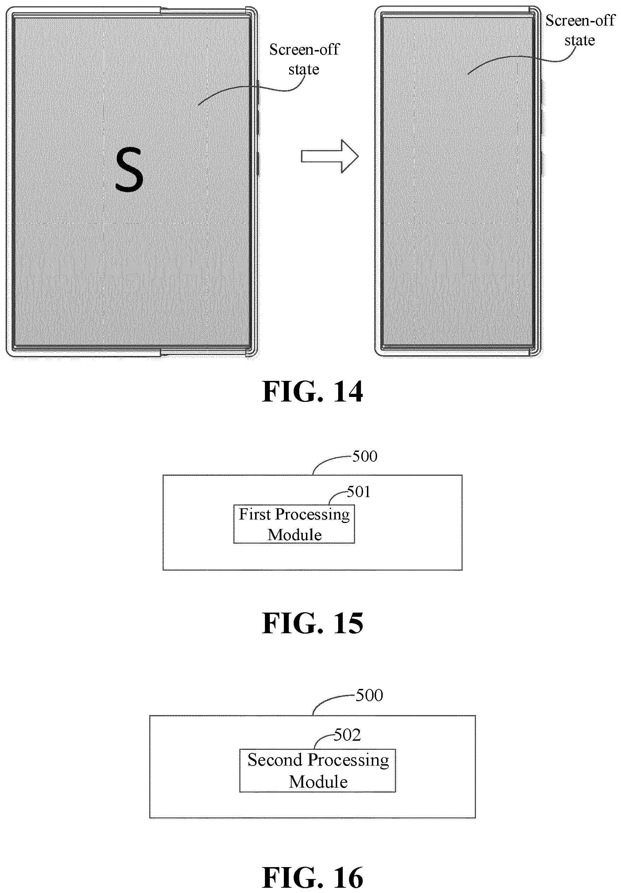

After elapse of a duration, for example, as the user does not touch the display screen within a preset duration, the touch display screen will enter the screen-off state again. And then the user needs to retract the expanded touch display screen back. Then, still in the screen-off state, the user can draw an S-shaped pattern on the touch display screen, that is, the electronic device detects that the touch trajectory of the touch operation received on the touch display screen is the preset S-shaped trajectory. In this case, as illustrated in FIG. 14, the electronic device can control the retractable touch display screen to retract. It can be seen from FIG. 14, when the touch display screen is retracted to roll up, the area of the touch display screen available for touch and display on the electronic device is reduced.

It can be understood that, on the one hand, in the implementations of the disclosure, the operability, operation diversity, and flexibility of the electronic device to the retractable touch display screen can be improved. Moreover, since in the implementations of the disclosure the deployment and retraction of the retractable touch display screen can be controlled by gestures and the movement of the control icon, in the implementations of the disclosure it is convenient for controlling the deploy/retraction of the retractable touch display screen by the user with one hand. On the other hand, since a method for controlling the retractable touch display screen to deploy/retract provided in the implementations of the disclosure is carried out by simply touching the touch display screen without additional physical buttons, in the implementations of the disclosure, an appearance design of the electronic device can be simplified, and hardware such as redundant physical buttons are not needed, and thus the electronic device is more aesthetic.

In other implementations, the control icon can be hidden when not in use. When the control icon needs to be used, the user can call out the control icon in a preset way. For example, when the control icon is displayed on the touch display screen, if the user does not touch the control icon within a preset five-minute, the control icon can then be hidden, that is, no longer displayed on the screen. When the control icon needs to be used, the user can call out the control icon by means of voice wake-up. For example, the user can speak a preset voice command, and the electronic device can perform voiceprint recognition upon receiving the voice command. If it is detected through voiceprint recognition that the voice command is a voice issued by a preset user (such as the owner), the electronic device can call out the control icon, that is, display the control icon on the screen.

In an implementation, if the electronic device receives an instruction for deploying the retractable touch display screen (for example, the user moves the control icon rightward in the screen-on state or the user draws a Z-shaped pattern on the touch display screen in the screen-off state), the electronic device can first detect whether the retractable touch display screen is fully deployed. If it is detected that the retractable touch display screen has not been fully deployed, the electronic device can then continue to deploy the retractable touch display screen. If it is detected that the retractable touch display screen is fully deployed, the electronic device may not respond to the instruction for deploying the retractable touch display screen.

If the electronic device receives an instruction for retracting the retractable touch display screen (for example, in the screen-on state, the user moves the control icon leftward or the user draws an S-shaped pattern on the touch display screen in the screen-off state), the electronic device may first detect whether the retractable touch display screen has been fully retracted. If it is detected that the retractable touch display screen has not been fully retracted, the electronic device can then continue to retract the retractable touch display screen. If it is detected that the retractable touch display screen is fully retracted, the electronic device may not respond to the instruction for retracting the retractable touch display screen, and so on.

Refer to FIG. 15, which is a first schematic structural diagram of a device control apparatus provided in implementations of the disclosure. The device control apparatus is applicable to an electronic device. The electronic device includes a retractable touch display screen and is configured with a control icon. The device control apparatus 500 includes a first processing module 501.

The first processing module 501 is configured to control the retractable touch display screen to deploy/retract according to a first preset operation when the touch display screen is in a screen-on state and the control icon receives a first preset operation.

In an implementation, the control icon is movable. The first processing module 501 can be configured to: determine a movement parameter of the control icon when the touch display screen is in the screen-on state and the control icon is moved; and control the retractable touch display screen to deploy/retract according to the movement parameter if the movement parameter of the control icon meets a preset condition.

In an implementation, the first processing module 501 is configured to: control the retractable touch display screen to deploy if a movement direction of the control icon is a first preset direction, and control the retractable touch display screen to retract if the movement direction of the control icon is a second preset direction.

In an implementation, the movement parameter further includes a movement distance.

The first processing module 501 can be configured to: control the retractable touch display screen to deploy when the movement direction of the control icon is the first preset direction and the movement distance of the control icon is greater than or equal to a preset distance threshold; and control the retractable touch display screen to retract when the movement direction of the control icon is the second preset direction and the movement distance of the control icon is greater than or equal to the preset distance threshold.

In an implementation, the movement parameter further includes a pressure value of a press detected at a target position on the touch display screen, and the target position is any position on a movement trajectory.

The first processing module 501 can be configured to control the retractable touch display screen to deploy when the movement direction of the control icon is the first preset direction and the pressure value is greater than or equal to a preset pressure threshold, and to control the retractable touch display screen to retract when the movement direction of the control icon is the second preset direction and the pressure value is greater than or equal to the preset pressure threshold.

Refer to FIG. 16, which is a second schematic structural diagram of a device control apparatus provided in implementations of the disclosure. The device control apparatus is applicable to an electronic device. The electronic device includes a retractable touch display screen. The device control apparatus 500 can include a second processing module 502.

The second processing module 502 is configured to control the retractable touch display screen to deploy/retract according to a second preset operation when the touch display screen is in a screen-off state and the touch display screen receives the second preset operation.

In an implementation, the second processing module 502 can be configured to determine a touch trajectory of a touch operation when the touch display screen is in the screen-off state and the touch display screen receives the touch operation; control the retractable touch display screen to deploy according to a first trajectory if the touch trajectory of the touch operation is the first preset trajectory; and control the retractable touch display screen to retract according to a second trajectory if the touch trajectory of the touch operation is the second preset trajectory.

In an implementation, the second processing module 502 can be configured to: control the touch display screen to enter a light-sleep mode when the touch display screen is in the screen-off state, where in the light-sleep mode, the electronic device powers the touch display screen, and when the touch display screen receives the touch operation, an interrupt detection event is triggered to detect whether a touch operation is a second preset operation; and control the retractable touch display screen to deploy/retract according to the second preset operation when the touch operation is the second preset operation.

A computer-readable storage medium is provided in the implementations of the disclosure. The computer-readable storage medium is configured to store computer programs which, when executed on a computer, are operable to cause the computer to perform operations in the device control method provided in the implementations of the disclosure.

An electronic device is provided in the implementations of the disclosure. The electronic device includes a memory and a processor. The processor is configured to invoke computer programs stored in the memory to perform operations in the device control method provided in the implementations of the disclosure.

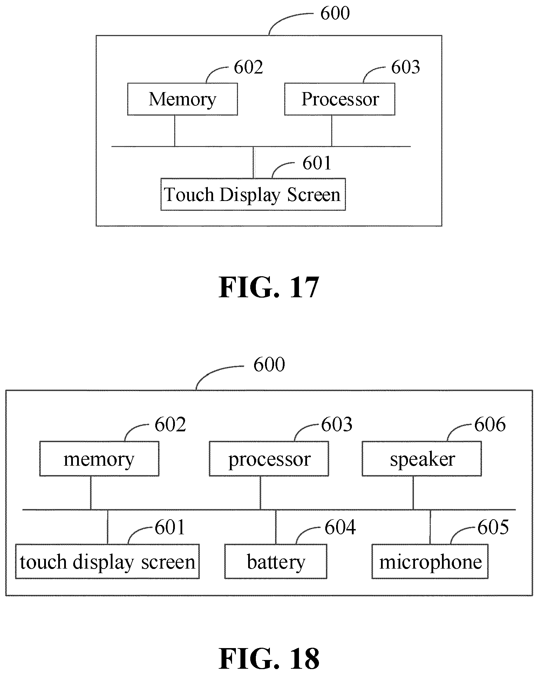

For example, the above-mentioned electronic device may be a mobile terminal such as a tablet computer or a smartphone. Refer to FIG. 17, which is a schematic structural diagram of an electronic device provided in implementations of the disclosure.

The electronic device 600 includes a touch display screen 601, a memory 602, a processor 603, and other components. It can be appreciated by those skilled in the art that, the structure of the electronic device illustrated in FIG. 17 does not constitute any limitation on an electronic device. The electronic device may include more or fewer components than illustrated or may combine certain components or have different configurations or arrangements of components.

The touch display screen 601 can be the retractable touch display screen. The retractable touch display screen may be a touch display screen that can be deployed or retracted. The retractable touch display screen can be a flexible display screen which can be bent, rolled, folded, and the like. In the electronic device provided with the retractable touch display screen, a screen visible size can be increased by deploying the retractable touch display screen and be reduced by retracting the retractable touch display screen.

The memory 602 may be used to store application programs and data. The application programs stored in the memory 602 contain executable codes. The application programs can be composed of various functional modules. The processor 603 executes various functional applications and data processing by executing the application programs stored in the memory 602.

The processor 603 is the control center of the electronic device and is configured to connect various parts of the whole electronic device through various interfaces and lines. The processor 603 runs or executes application programs stored in the memory 602 and invokes data stored in the memory 602 to perform various functions of the electronic device and process data, thereby monitoring the electronic device as a whole.

In this implementation, the electronic device is provided with the control icon. The processor 603 in the electronic device loads executable codes corresponding to processes of one or more application programs into the memory 602 according to the following instructions, and the processor 603 runs the application programs stored in the memory 602 to execute the following. The retractable touch display screen is controlled to deploy/retract according to a first preset operation when the touch display screen is in a screen-on state and the control icon receives the first preset operation. Alternatively, in this implementation, the electronic device is provided with the control icon, the processor 603 in the electronic device loads the executable codes corresponding to processes of one or more application programs into the memory 602 according to the following instructions, and the processor 603 runs the application programs stored in the memory 602 to execute the following. The retractable touch display screen is controlled to deploy/retract according to a second preset operation when the touch display screen is in a screen-off state and the touch display screen receives the second preset operation.

Refer to FIG. 18, the electronic device 600 may include a touch display screen 601, a memory 602, a processor 603, a battery 604, a microphone 605, a speaker 606, and other components.

The touch display screen 601 can be the retractable touch display screen. The retractable touch display screen may be a touch display screen that can be deployed or retracted. The retractable touch display screen can be a flexible display screen which can be bent, rolled, folded, and the like. In the electronic device provided with the retractable touch display screen, a screen visible size can be increased by deploying the retractable touch display screen and be reduced by retracting the retractable touch display screen.

The memory 602 may be used to store application programs and data. The application programs stored in the memory 602 contain executable codes. The application programs can be composed of various functional modules. The processor 603 executes various functional applications and data processing by executing the application programs stored in the memory 602.

The processor 603 is the control center of the electronic device and is configured to connect various parts of the whole electronic device through various interfaces and lines. The processor 603 runs or executes application programs stored in the memory 602 and invokes data stored in the memory 602 to perform various functions of the electronic device and process data, thereby monitoring the electronic device as a whole.

The battery 604 may be used to power various modules and components of the electronic device.

The microphone 605 can be used to pick up sound signals in the surrounding environment, for example, to receive voice commands issued by the user.

The speaker 606 may be used to play sound signals.

In this implementation, the electronic device is provided with the control icon. The processor 603 in the electronic device loads executable codes corresponding to processes of one or more application programs into the memory 602 according to the following instructions, and the processor 603 runs the application programs stored in the memory 602 to execute the following. The retractable touch display screen is controlled to deploy/retract according to a first preset operation when the touch display screen is in a screen-on state and the control icon receives the first preset operation.

In an implementation, the control icon is movable.

The processor 603 controls the retractable touch display screen to deploy/retract according to the first preset operation when the touch display screen is in the screen-on state and the control icon receives the first preset operation as follows. The processor 603 is configured to: determine a movement parameter of the control icon when the touch display screen is in the screen-on state and the control icon is moved; and control the retractable touch display screen to deploy/retract according to the movement parameter if the movement parameter of the control icon meets a preset condition.

In an implementation, the processor 603 controls the retractable touch display screen to deploy/retract according to the movement parameter if the movement parameter of the control icon meets the preset condition as follows. The processor 603 is configured to: control the retractable touch display screen to deploy if a movement direction of the control icon is a first preset direction; and/or control the retractable touch display screen to retract if the movement direction of the control icon is a second preset direction.

In an implementation, the movement parameter further includes a movement distance.

The processor 603 controls the retractable touch display screen to deploy if the movement direction of the control icon is the first preset direction as follows. The processor 603 is configured to control the retractable touch display screen to deploy if a movement direction of the control icon is a first preset direction.

The processor 603 controls the retractable touch display screen to retract if the movement direction of the control icon is the second preset direction as follows. The processor 603 is configured to control the retractable touch display screen to retract when the movement direction of the control icon is the second preset direction and the movement distance of the control icon is greater than or equal to the preset distance threshold.

In an implementation, the movement parameter further includes a pressure value of a press detected at a target position on the touch display screen, and the target position is any position on a movement trajectory.

The processor 603 controls the retractable touch display screen to deploy if the movement direction of the control icon is the first preset direction as follows. The processor 603 is configured to control the retractable touch display screen to deploy when the movement direction of the control icon is the first preset direction and the pressure value is greater than or equal to a preset pressure threshold.

The processor 603 controls the retractable touch display screen to retract if the movement direction of the control icon is the second preset direction as follows. The processor 603 is configured to control the retractable touch display screen to retract when the movement direction of the control icon is the second preset direction and the pressure value is greater than or equal to the preset pressure threshold.

Alternatively, in this implementation, the electronic device is provided with the control icon, the processor 603 in the electronic device loads the executable codes corresponding to processes of one or more application programs into the memory 602 according to the following instructions, and the processor 603 runs the application programs stored in the memory 602 to execute the following. The retractable touch display screen is controlled to deploy/retract according to a second preset operation when the touch display screen is in a screen-off state and the touch display screen receives the second preset operation.

In an implementation, the processor 603 controls the retractable touch display screen to deploy/retract according to the second preset operation when the touch display screen is in the screen-off state and the touch display screen receives the second preset operation as follows. The processor 603 is configured to: determine a touch trajectory of a touch operation when the touch display screen is in the screen-off state and the touch display screen receives the touch operation; control the retractable touch display screen to deploy according to a first trajectory if the touch trajectory of the touch operation is the first preset trajectory; and/or control the retractable touch display screen to retract according to a second trajectory if the touch trajectory of the touch operation is the second preset trajectory.

In an implementation, the processor 603 controls the retractable touch display screen to deploy/retract according to the second preset operation when the touch display screen is in the screen-off state and the touch display screen receives the second preset operation as follows. The processor 603 is configured to: control the touch display screen to enter a light-sleep mode when the touch display screen is in the screen-off state, where in the light-sleep mode, the electronic device powers to the touch display screen, and when the touch display screen receives the touch operation, an interrupt detection event is triggered to detect whether a touch operation is a second preset operation; and control the retractable touch display screen to deploy/retract according to the second preset operation when the touch operation is the second preset operation.

Description of each of the foregoing implementations has its own emphasis. For part not described in detail in one implementation, reference can be made to the foregoing description of the device control method, which will not be repeated herein.

The device control apparatus provided in the implementations of the disclosure and the device control method described in above implementations belong to the same concept. Any method provided in implementations of the device control method can be run on the device control apparatus. For details of the implementation process, reference can be made to the implementations of the device control method, which will not be repeated herein.

It should be noted that, for the device control method provided herein, those of ordinary skill in the art can understand that all or part of the operations of the device control method can be achieved by controlling relevant hardware via computer programs. The computer programs can be stored in a computer readable storage medium. For example, the computer programs can be stored in a memory and executed by at least one processor. The computer programs, when executed by the at least one processor, can be operable with the at least one processor to perform operations of the device control method. The storage medium may be a magnetic disk, an optical disk, a read only memory (ROM), a random access memory (RAM), or the like.

For the device control apparatus of the implementations of the disclosure, various functional modules thereof can be integrated into one processing chip, or may be present as a number of physically separated modules, or two or more modules may be integrated into one. The integrated module may take the form of hardware or a software functional module. If the integrated module is implemented as a software functional module and sold or used as a standalone product, it may be stored in a computer readable storage medium. Examples of the storage medium may include a ROM, a magnetic disk, an optical disk, or the like.

The above has described in detail the device control method, the apparatus, the storage medium, and the electronic device provided in implementations. While the disclosure has been described in connection with certain implementations, it is to be understood that the disclosure is not to be limited to the disclosed implementations but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A device control method applicable to an electronic device, the electronic device comprising a retractable touch display screen and being configured with a control icon, the method comprising:
controlling the retractable touch display screen to deploy/retract according to a first preset operation in response to the touch display screen being in a screen-on state and the control icon receiving the first preset operation.

2. The device control method of claim 1, wherein the control icon is movable, and controlling the retractable touch display screen to deploy/retract according to the first preset operation in response to the touch display screen being in the screen-on state and the control icon receiving the first preset operation comprises:
determining a movement parameter of the control icon in response to the touch display screen being in the screen-on state and the control icon being moved; and
controlling the retractable touch display screen to deploy/retract according to the movement parameter in response to the movement parameter of the control icon meeting a preset condition.

3. The device control method of claim 2, wherein controlling the retractable touch display screen to deploy/retract according to the movement parameter in response to the movement parameter of the control icon meeting a preset condition comprises:
controlling the retractable touch display screen to deploy in response to a movement direction of the control icon being a first preset direction; or
controlling the retractable touch display screen to retract in response to the movement direction of the control icon being a second preset direction.

4. The device control method of claim 3, wherein
the movement parameter further comprises a movement distance;
controlling the retractable touch display screen to deploy in response to the movement direction of the control icon being the first preset direction comprises:
controlling the retractable touch display screen to deploy in response to the movement direction of the control icon being the first preset direction and the movement distance of the control icon being greater than or equal to a preset distance threshold; and
controlling the retractable touch display screen to retract in response to the movement direction of the control icon being the second preset direction comprises:
controlling the retractable touch display screen to retract in response to the movement direction of the control icon being the second preset direction and the movement distance of the control icon being greater than or equal to the preset distance threshold.

5. The device control method of claim 3, wherein
the movement parameter further comprises a pressure value of a press detected at a target position on the touch display screen, the target position being any position on a movement trajectory;
controlling the retractable touch display screen to deploy in response to the movement direction of the control icon being the first preset direction comprises:
controlling the retractable touch display screen to deploy in response to the movement direction of the control icon being the first preset direction and the pressure value being greater than or equal to a preset pressure threshold; and
controlling the retractable touch display screen to retract in response to the movement direction of the control icon being the second preset direction comprises:
controlling the retractable touch display screen to retract in response to the movement direction of the control icon being the second preset direction and the pressure value being greater than or equal to the preset pressure threshold.

6. A device control method applicable to an electronic device, the electronic device comprising a retractable touch display screen, and the method comprising:
controlling the retractable touch display screen to deploy/retract according to a second preset operation in response to the touch display screen being in a screen-off state and the touch display screen receiving the second preset operation.

7. The device control method of claim 6, wherein controlling the retractable touch display screen to deploy/retract according to the second preset operation in response to the touch display screen being in the screen-off state and the touch display screen receiving the second preset operation comprises:
determining a touch trajectory of a touch operation in response to the touch display screen being in the screen-off state and the touch display screen receiving the touch operation;
controlling the retractable touch display screen to deploy according to a first trajectory in response to the touch trajectory of the touch operation being the first preset trajectory; and
controlling the retractable touch display screen to retract according to a second trajectory in response to the touch trajectory of the touch operation being the second preset trajectory.

8. The device control method of claim 6, wherein controlling the retractable touch display screen to deploy/retract according to the second preset operation in response to the touch display screen being in the screen-off state and the touch display screen receives the second preset operation comprises:
controlling the touch display screen to enter a light-sleep mode in response to the touch display screen being in the screen-off state, wherein in the light-sleep mode, the electronic device powers the touch display screen, and an interrupt detection event is triggered to detect whether a touch operation is a second preset operation in response to the touch display screen receiving the touch operation; and
controlling the retractable touch display screen to deploy/retract according to the second preset operation in response to the touch operation being the second preset operation.

9. A device control apparatus applicable to an electronic device, the electronic device comprising a retractable touch display screen and being configured with a control icon, and the device control apparatus comprising:
a first processing module, configured to control the retractable touch display screen to deploy/retract according to a first preset operation in response to the touch display screen being in a screen-on state and the control icon receiving a first preset operation.

10. A device control apparatus applicable to an electronic device, the electronic device comprising a retractable touch display screen, and the device control apparatus comprising:
a second processing module, configured to control the retractable touch display screen to deploy/retract according to a second preset operation in response to the touch display screen being in a screen-off state and the touch display screen receiving the second preset operation.

11. A computer-readable storage medium, configured to store computer programs which, when executed on a computer, are operable to cause the computer to perform the device control method of claim 1.

12. A computer-readable storage medium, configured to store computer programs which, when executed on a computer, are operable to cause the computer to perform the device control method of claim 6.

13. An electronic device comprising a memory, a processor, and a retractable touch display screen and being configured with a control icon, the processor being configured to invoke computer programs stored in the memory to:
control the retractable touch display screen to deploy/retract according to a first preset operation in response to the touch display screen being in a screen-on state and the control icon receiving the first preset operation.

14. The electronic device of claim 13, wherein the control icon is movable, and the processor is configured to:
determine a movement parameter of the control icon in response to the touch display screen being in the screen-on state and the control icon being moved; and
control the retractable touch display screen to deploy/retract according to the movement parameter in response to the movement parameter of the control icon meeting a preset condition.

15. The electronic device of claim 14, wherein the processor is configured to:
control the retractable touch display screen to deploy in response to a movement direction of the control icon being a first preset direction; or
control the retractable touch display screen to retract in response to the movement direction of the control icon being a second preset direction.

16. The electronic device of claim 15, wherein the movement parameter further comprises a movement distance, and the processor is configured to:
control the retractable touch display screen to deploy in response to the movement direction of the control icon being the first preset direction and the movement distance of the control icon being greater than or equal to a preset distance threshold; and
control the retractable touch display screen to retract in response to the movement direction of the control icon being the second preset direction and the movement distance of the control icon being greater than or equal to the preset distance threshold.

17. The electronic device of claim 15, wherein the movement parameter further comprises a pressure value of a press detected at a target position on the touch display screen, the target position being any position on a movement trajectory, and the processor is configured to:
control the retractable touch display screen to deploy in response to the movement direction of the control icon being the first preset direction and the pressure value being greater than or equal to a preset pressure threshold; and
control the retractable touch display screen to retract in response to the movement direction of the control icon being the second preset direction and the pressure value being greater than or equal to the preset pressure threshold.

18. An electronic device comprising a memory, a processor, and a retractable touch display screen and being configured with a control icon, the processor being configured to invoke computer programs stored in the memory to:
control the retractable touch display screen to deploy/retract according to a second preset operation in response to the touch display screen being in a screen-off state and the touch display screen receiving the second preset operation.

19. The electronic device of claim 18, the processor is configured to:
determine a touch trajectory of a touch operation in response to the touch display screen being in the screen-off state and the touch display screen receiving the touch operation;
control the retractable touch display screen to deploy according to a first trajectory in response to the touch trajectory of the touch operation being the first preset trajectory; and
control the retractable touch display screen to retract according to a second trajectory in response to the touch trajectory of the touch operation being the second preset trajectory.

20. The electronic device of claim 18, the processor is configured to:
control the touch display screen to enter a light-sleep mode in response to the touch display screen being in the screen-off state, wherein in the light-sleep mode, the electronic device powers to the touch display screen, and an interrupt detection event is triggered to detect whether a touch operation is a second preset operation in response to the touch display screen receiving the touch operation; and
control the retractable touch display screen to deploy/retract according to the second preset operation in response to the touch operation being the second preset operation.
